# EUROPÄISCHE PATENTSCHRIFT

(11) **EP 1 347 666 B1**
(45) Veröffentlichungstag und Bekanntmachung des Hinweises auf die Patenterteilung: **17.08.2005**
(21) Anmeldenummer: 03100630.7
(22) Anmeldetag: 12.03.2003
(51) Int. Cl.: H04Q 7/38

(54) **Verfahren zur Überleitung einer Kommunikationsverbindung**
Method for transferring a communications connection
Procédé pour transferer une connection de communication

(30) Priorität: 19.03.2002 DE 10212137
(43) Veröffentlichungstag der Anmeldung: 24.09.2003
(73) Patentinhaber: SIEMENS AKTIENGESELLSCHAFT, 80333 München (DE)
(72) Erfinder: Blickberndt, Dirk, 41516 Grevenbroich (DE); Schaade, Stephan, 86807 Buchloe (DE); Wille, Klaus, 81679 München (DE)

(56) Entgegenhaltungen:
- EP-A- 0 700 227
- EP-A- 1 111 886
- EP-A- 1 178 693
- WO-A-01/43459
- US-A- 6 018 672

## Beschreibung

Die vorliegende Erfindung betrifft ein Verfahren zur Überleitung einer Kommunikationsverbindung von einer portablen Einrichtung auf eine dezentrale Kommunikationseinrichtung, insbesondere Kommunikationsendgerät.

Zeitgemäße zentrale Kommunikationseinrichtungen stellen an ihren zugeordneten Kommunikationsendgeräten eine Vielzahl von Leistungsmerkmalen bereit, die für zahlreiche Bediener zum unverzichtbaren Bestandteil alltäglicher Kommunikationsunterstützung zählen. Diese Leistungsmerkmale umfassen beispielsweise die bekannten Funktionen "Rückfrage", "Halten", "Weitervermitteln", "Makeln", "Konferenz" usw., die ein gängiger Bestandteil moderner Kommunikationseinrichtungen sind.

Um eine stetige Erreichbarkeit gewährleisten zu können, nutzen viele Bediener neben ihrem stationären Kommunikationsendgerät auch portable Einrichtungen. Zu portablen Einrichtungen zählen z.B. mobile Kommunikationsendgeräte oder auch mobile Rechnereinheiten wie Notebooks, PDAs (Personal Digital Assistant), usw. Derlei portable Einrichtungen werden von einem wachsenden Personenkreis nahezu ständig mit sich geführt und sind daher im allgemeinen nicht der beschriebenen Kommunikationseinrichtung - oder allgemeiner, bei einem Verbund von Kommunikationseinrichtungen, einem Kommunikationssystem - zugeordnet.

Beispielsweise unterhält ein Bediener eine portable Einrichtung für seinen privaten Gebrauch, nutzt diese aber auch für berufliche Zwecke innerhalb seiner Firma, in der er weiterhin über ein dem firmeneigenen Kommunikationssystem zugeordnetes Kommunikationsendgerät verfügt. Nimmt der Bediener einen Anruf auf seiner portablen Einrichtung entgegen, stehen diesem somit nicht die durch das Kommunikationssystem gewohnten Leistungsmerkmale zur Verfügung.

Die WO 01/43459 A2 beschreibt ein Verfahren zur Weiterleitung eines an einem drahtlosen Endgerät geführten Gesprächs an ein drahtgebundenes Endgerät, bei dem das drahtlose Endgerät über eine Luftschnittstelle eine dem drahtgebundenen Endgerät zugeordnete Teilnehmernummer anfordert, auf deren Basis eine zweite parallele Verbindung zwischen rufendem Teilnehmer und dem drahtgebunden durch Endgerät aufgebaut wird. Mit Entgegennahme des Gesprachs am drahtgebundenen Endgerät wird die ursprüngliche Verbindung gelöst.

Eine Aufgabe der Erfindung ist es, ein Vereinfachten Verfahren anzugeben, durch das eine Nutzung von Leistungsmerkmalen eines Kommunikationssystems bei einer Entgegennahme von Anrufen auf dem Kommunikationssystem nicht zugeordneten, portablen Einrichtungen ermöglicht wird.

Eine Lösung der Aufgabe erfolgt durch die Merkmale des Patentanspruchs 1 bzw. 11.

Erfindungsgemäß erfolgt eine Überleitung einer mit einer portablen Einrichtung bestehenden Kommunikationsverbindung auf eine einer zentralen Kommunikationseinrichtung zugeordnete dezentrale Kommunikationseinrichtung. Die dezentrale Kommunikationseinrichtung kann dabei beispielsweise als Kommunikationsendgerät oder als Datenterminal ausgestaltet sein. Die Überleitung und Aufrechterhaltung der Kommunikationsverbindung wird über eine Luftschnittstelle unter Verwendung einer jeweiligen Sende-/Empfangseinheit am Kommunikationsendgerät sowie an der portablen Einrichtung bewerkstelligt.

Ein Vorteil des erfindungsgemäßen Verfahrens ist darin zu sehen, dass ein Bediener nach der Entgegennahme einer Kommunikationsverbindung an seiner portablen Einrichtung diese auf eine dezentrale Kommunikationseinheit - z.B. ein drahtgebundenes, beispielsweise an seinem Arbeitsplatz lokalisiertes Kommunikationsendgerät - überleiten kann. Diese Überleitung wird von den meisten Bedienern - u.a. zur Vermeidung einer durch die periphere Einrichtung verursachten lokalen Belastung durch elektromagnetische Strahlung oder auch einer als unangenehm empfundenen, durch einen Hörer der peripheren Einrichtung verursachten Hitzeentwicklung - als vorteilhafte Annehmlichkeit geschätzt.

Ein wesentlicher Vorteil der vorliegenden Erfindung ist insbesondere darin zu sehen, dass durch die Überleitung an ein der zentralen Kommunikationssystem zugeordnetes dezentrales Kommunikationssystem das Leistungsmerkmalsspektrum des zentralen Kommunikationssystems auch für die übergeleitete, ursprünglich an der portablen Einrichtung zustandegekommenen Kommunikationsverbindung zur Verfügung steht. Der Bediener kann also z.B. eine Rückfrage zu einem kommunikationssysteminternen Teilnehmer an seinem dezentralen Kommunikationssystem - Kommunikationsendgerät - einleiten usw.

Vorteilhafte Weiterbildungen der Erfindung sind in den Unteransprüchen angegeben.

Mit der vorteilhaften Verwendung zweier Basiskanäle zum Austausch von Nutzdaten des Kommunikationsendgeräts mit einer zentralen Kommunikationseinrichtung wird eine Steuerung der Kommunikationsverbindung durch die zentrale Kommunikationseinrichtung gewährleistet. Der zweite Basiskanal wird dabei für eine Rückführung der Nutzdaten auf das Kommunikationsendgerät verwendet, sodass das Gespräch an diesem geführt werden kann.

Mit einer Ausgestaltung der Luftschnittstelle gemäß des "Bluetooth"-Standards ist eine vorteilhafte Verwendung einer standardisierten Infrastruktur gegeben, die zunehmend bei elektronischen Geräten mit Kommunikationsschnittstellen angewandt wird. Zudem werden unter Verwendung von Bluetooth Daten im Mikrowellenbereich ausgetauscht, sodass die Gestaltung der Luftschnittstelle nicht auf eine Anordnung der Kommunikationspartner in unmittelbaren Sichtkontakt beschränkt ist.

Ein Ausführungsbeispiel der Erfindung wird im folgenden anhand der Zeichnung näher erläutert.

Dabei zeigen:
- Fig. 1:: ein Strukturbild zur schematischen Darstellung einer erfindungsgemäßen Überleitung einer Kommunikationsverbindung; und
- Fig. 2:: ein gegenüber Fig. 1 vereinfachtes Strukturbild zur schematischen Darstellung einer erfindungsgemäßen Überleitung einer Kommunikationsverbindung.

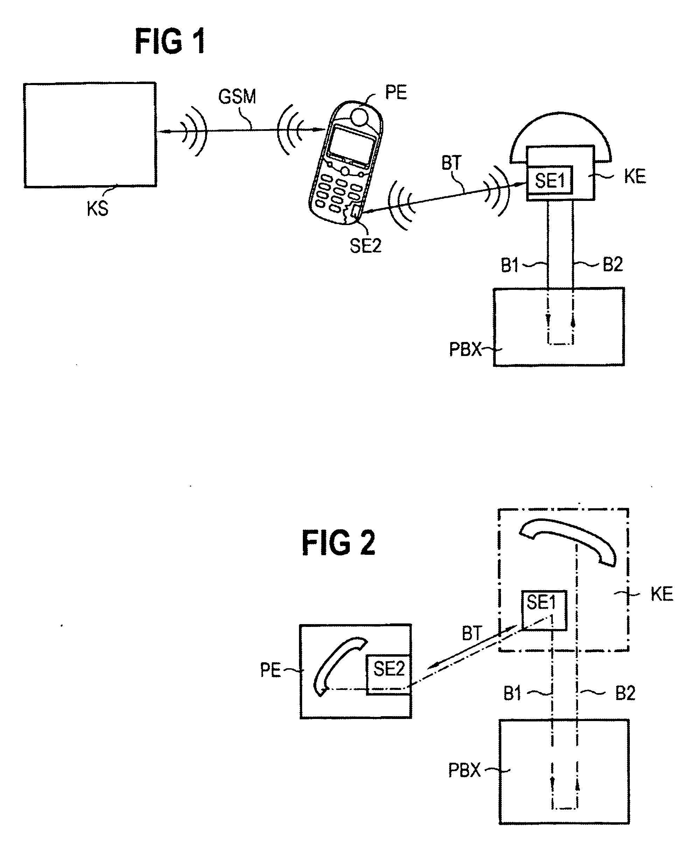

Fig. 1 zeigt eine Kommunikationseinrichtung PBX mit einem über einen ersten und einen zweiten Nutzdaten übertragenden Basiskanal B1,B2 sowie über einen - nicht dargestellten - Signalisierungsinformationen übertragenden Signalisierungskanal verbundenen Kommunikationsendgerät KE und einer über eine Luftschnittstelle BT mit dem Kommunikationsendgerät KE kommunizierenden portablen Einrichtung PE.

Die Kommunikationseinrichtung PBX arbeitet beispielsweise nach einem dem Fachmann als ISDN (Integrated Services Digital Network) bekannten Standard und nach einem zeitschlitzorientierten Vermittlungsprinzip - in der Fachwelt oftmals als "Time Division Multiplex", TDM bezeichnet - und verfügt demgemäss über ein entsprechendes - nicht dargestelltes - Koppelfeld. Bei einer ISDN-Verbindung über einen sogenannten - nicht dargestellten - D-Kanal ausgetauschte Signalisierungsinformationen enthalten Daten zur Verbindungssteuerung, Signalisierung usw. Ein weiterer Bestandteil der zwischen dem Kommunikationsendgerät KE und der Vermittlungseinrichtung PBX ausgetauschten Daten sind Nutzinformationen, die z.B. Sprach- und/oder Videokommunikationsdaten enthalten. In einem ISDN-Kommunikationssystem werden diese Nutzinformationen über einen bzw. mehrere Basiskanäle B1,B2 oder auch B-Kanäle übertragen.

Über die Luftschnittstelle BT erfolgt eine bidirektionale Datenübertragung zwischen einer dem Kommunikationsendgerät KE zugeordneten ersten Sende-/Empfangseinheit SE1 und einer der portablen Einrichtung PE zugeordneten zweiten Sende-/Empfangseinheit SE2. Diese Luftschnittstelle kann wie im Ausführungsbeispiel gemäß einer dem Fachmann als Bluetooth-Standard geläufigen Ausgestaltung als Funkschnittstelle oder auch gemäß einer dem Fachmann als IrDA-Standard (Infrared Data Association) geläufigen Ausgestaltung als optische Schnittstelle ausgebildet sein.

Die portable Einrichtung PE ist beispielsweise in einer Ausführungsform als mobiles Kommunikationsendgerät oder auch als persönlicher digitaler Assistent (Personal Digital Assistant, PDA) verwirklicht. Im vorliegenden Ausführungsbeispiel ist die portable Einrichtung PE als mobiles Kommunikationsendgerät dargestellt. Ein die portable Einrichtung PE mit sich führender Bediener befinde sich im folgenden in lokaler Reichweite zum Kommunikationsendgerät KE. Er ist mittels einer von einem Kommunikationssystem KS gesteuerten Kommunikationsverbindung GSM mit einem - nicht dargestellten - weiteren Teilnehmer verbunden.

Der Bediener der portablen Einrichtung PE möchte nun die Kommunikationsverbindung GSM von der portable Einrichtung PE auf das Kommunikationsendgerät umleiten. Hierzu gibt er einen Befehl - beispielsweise in Form einer Betätigung eines berührungsempfindlichen Bereiches oder auch in gesprochener Form - zur Überleitung an die portable Einrichtung PE und/oder das Kommunikationsendgerät KE aus.

Nachdem der Bediener der portablen Einrichtung PE durch manuelle oder akustische Eingaben an der peripheren Einrichtung und/oder am Kommunikationsendgerät KE eine Aktivierung der Überleitung veranlasst hat, wird eine wechselseitige Kommunikation über die Luftschnittstelle BT nach dem Bluetooth-Standard aufgebaut, wobei die Sende-/Empfangseinheit SE1 gegenüber der Sende-/Empfangseinheit SE2 beispielsweise als drahtlose Hör-/Sprechkombination agiert. Diese Zuweisung eines Charakters oder auch engl. "Profile" eines jeweiligen Kommunikationsendpunktes an einer Bluetooth-Schnittstelle ist dem Fachmann aus dem Bluetooth-Standard - vgl. beispielsweise Bluetooth V1.1 Profile Specifications, Version 1.1 vom 22. Februar 2001, Part K:6: "Headset Profile" - bekannt. Die Aktivierung der wechselseitigen Kommunikation über die Luftschnittstelle BT kann von einer Identifizierungskennung der Sende-/Empfangseinheit SE2 abhängen, die die erste Sende-/Empfangseinheit SE1 anfordert. Mit dieser Maßnahme kann eingestellt werden, dass für eine erfindungsgemäße Überleitung nur portable Einrichtungen PE des Bedieners des Kommunikationsendgeräts KE zugelassen sind.

In Richtung der Kommunikationseinrichtung PBX agiert die erste Sende-/Empfangseinheit SE1 wie ein vom zugehörigen Kommunikationsendgerät KE unabhängiges Telephon eines "virtuellen Teilnehmers". Die erste Sende-/Empfangseinheit SE1 enthält also neben der Bluetooth-Schnittstellenfunktion eine Vielzahl weiterer Funktionen, die der Übersicht halber in einer Einheit zusammengefasst sind. Alternativ kann sich die erste Sende-/Empfangseinheit SE1 auch außerhalb der Kommunikationseinrichtung KE befinden, beispielsweise als ein mit der Kommunikationseinrichtung verbundener "Adapter", der an das Kommunikationsendgerät angesteckt wird.

An der ersten Sende-/Empfangseinheit SE1 erfolgt infolge des Aufbaus der Kommunikation ein automatischer Verbindungsaufbau zwischen der - als virtueller Teilnehmer agierenden - ersten Sende-/Empfangseinheit SE1 zum Kommunikationsendgerät KE. Diese Verbindung wird in der Zeichnung durch eine strichpunktierte Linie zwischen dem ersten und dem zweiten Basiskanal B1,B2 angedeutet. Der automatische Verbindungsaufbau kann unter Verwendung eines in modernen Kommunikationseinrichtungen PBX üblichen Leistungsmerkmals "Hotline zu vorprogrammiertem Ziel" erfolgen.

Umgekehrt bewirkt eine "Abschaltung" der zweiten Sende-/Empfangseinheit SE2 einen automatischen Verbindungsabbau zwischen der - als virtueller Teilnehmer agierenden - ersten Sende-/Empfangseinheit SE1 zum Kommunikationsendgerät KE.

Für den Fall, dass am Kommunikationsendgerät gerade ein Gespräch geführt wird, also z.B. der zweite Basiskanal B2 gerade belegt ist, kann die überzuleitende Kommunikationsverbindung als Zweitanruf entgegengenommen werden oder mittels des Leistungsmerkmals "Anrufumleitung im Besetztfall" an ein anderes Ziel innerhalb eines Verbundes mehrerer - nicht dargestellter - Kommunikationseinrichtungen geleitet werden.

Im Koppelfeld der Kommunikationseinrichtung PBX findet bei einer ausgeführten Überleitung eine - in der Zeichnung strichpunktiert dargestellte - Durchschaltung des ersten und zweiten Basiskanals B1,B2 statt. Die Richtungspfeile symbolisieren dabei nicht die Datenflussrichtung der auf den Basiskanälen B1,B2 bidirektional ausgetauschten Daten, sondern symbolisieren eine zeitliche Abfolge der Vermittlungsabläufe in der Kommunikationseinrichtung PBX.

Im folgenden wird unter weiterer Bezugnahme auf die Funktionseinheiten der Fig. 1 die Überleitung der Kommunikationsverbindung näher erläutert.

Fig. 2 zeigt gegenüber Fig. 1 vereinfachte Darstellungen der portablen Einrichtung PE bzw. des Kommunikationsendgeräts KE, die beide mit einem abgehobenen Hörer dargestellt sind, zwischen denen schematisch der Nutzdatenfluss - im weitesten Sinne also die Kommunikationsverbindung nach erfolgter Überleitung - strichpunktiert dargestellt ist. In Fig. 2 ist diese Überleitung der Kommunikationsverbindung bereits ausgeführt.

## Patentansprüche

1. Verfahren zur Überleitung einer Kommunikationsverbindung, mit
- einen einer zentralen Kommunikationseinrichtung (PBX) zugeordneten und eine erste Sende-/Empfangseinheit (SE1) für eine Luftschnittstelle (BT) aufweisenden dezentralen Kommunikationseinrichtung (KE), und,
- einer eine zweite Sende-/Empfangseinheit (SE2) für die Luftschnittstelle (BT) aufweisenden portablen Einrichtung (PE) zum Austausch von Informationen;
**dadurch gekennzeichnet,**
**dass** eine Kommunikationsverbindung (GSM) zwischen der portablen Einrichtung (PE) und einem zugehörigen Kommunikationssystem (KS) in eine über die Luftschnittstelle (BT) führende Kommunikationsverbindung an die dezentrale Kommunikationseinrichtung (KE) übergeleitet wird, indem die Kommunikationsverbindung (GSM) aufrechterhalten bleibt und bidirektional Nutzdaten der Kommunikationsverbindung über die Luftschnittstelle (BT) ausgetauscht werden.

2. Verfahren nach Anspruch 1,
**dadurch gekennzeichnet,**
**dass** die dezentrale Kommunikationseinrichtung (KE) über mindestens zwei Nutzdaten übertragende Basiskanäle (B1,B2) mit der zentralen Kommunikationseinrichtung (PBX) verbunden ist.

3. Verfahren nach Anspruch 2,
**dadurch gekennzeichnet,**
**dass** bei einer übergeleiteten Kommunikationsverbindung
- Nutzdaten der Kommunikationsverbindung zwischen der ersten Sende-/Empfangseinheit (SE1) über den ersten Basiskanal (B1) mit der zentralen Kommunikationseinrichtung (PBX), und,
- Nutzdaten zwischen der zentralen Kommunikationseinrichtung (PBX) und der dezentralen Kommunikationseinrichtung (KE) über den zweiten Basiskanal (B2) ausgetauscht werden.

4. Verfahren nach einem der vorhergehenden Ansprüche,
**dadurch gekennzeichnet,**
**dass** bei einer Positionierung der zweiten Sende-/Empfangseinheit (SE2) in Reichweite der ersten Sende-/Empfangseinheit (SE1) die Überleitung von der ersten Sende-/Empfangseinheit (SE1) über die Luftschnittstelle (BT) eingeleitet wird.

5. Verfahren nach Anspruch 4,
**dadurch gekennzeichnet,**
**dass** die Einleitung der Überleitung nur bei Vorliegen einer festgelegten Identifizierungskennung der ersten und/oder zweiten Sende-/Empfangseinheit (SE1,SE2) erfolgt.

6. Verfahren nach einem der Ansprüche 4 bis 5,
**dadurch gekennzeichnet,**
**dass** die Einleitung der Überleitung nur bei Vorliegen einer Bestätigungseingabe an der dezentralen Kommunikationseinrichtung (KE) und/oder an der portablen Einrichtung (PE) erfolgt.

7. Verfahren nach einem der Ansprüche 4 bis 6,
**dadurch gekennzeichnet,**
**dass** die erste Sende-/Empfangseinheit (SE1) zur Einleitung der Überleitung einen Befehl für einen automatischen Verbindungsaufbau von der ersten Sende-/Empfangseinheit (SE1) über die zentrale Kommunikationseinrichtung (PBX) zu der dezentralen Kommunikationseinrichtung (KE) als vorprogrammiertem Ziel an die zentrale Kommunikationseinrichtung (PBX) sendet.

8. Verfahren nach einem der vorhergehenden Ansprüche,
**dadurch gekennzeichnet,**
**dass** die Luftschnittstelle (BT) gemäß des Bluetooth-Standards arbeitet.

9. Verfahren nach einem der vorhergehenden Ansprüche,
**dadurch gekennzeichnet,**
**dass** sich die erste Sende-/Empfangseinheit (SE1) gegenüber der zweiten Sende-/Empfangseinheit (SE2) als drahtlose Hör-/Sprechkombination identifiziert.

10. Verfahren nach einem der vorhergehenden Ansprüche,
**dadurch gekennzeichnet,**
**dass** die portable Einrichtung (PE) zumindest teilweise Funktionalitäten eines mobilen Kommunikationsendgeräts aufweist.

11. Dezentrale Kommunikationseinrichtung, welche einer zentralen Kommunikationseinrichtung (PBX) zugeordnet ist, mit einer Sende-/Empfangseinheit (SE2) für eine Luftschnittstelle (BT)
**gekennzeichnet durch**,
Mittel zum Überleiten einer Kommunikationsverbindung (GSM) zwischen einer portablen Einrichtung (PE) und einem zugehörigen Kommunikationssystem (KS) in eine über die Luftschnittstelle (BT) führende Kommunikationsverbindung an die dezentrale Kommunikationseinrichtung (KE), wobei **durch** die Mittel eine Aufrechterhaltung der Kommunikationsverbindung (GSM) vorgesehen ist, und,
eine zum Austausch von Nutzdaten der Kommunikationsverbindung betriebene Luftschnittstelle (BT).

12. Dezentrale Kommunikationseinrichtung nach Anspruch 11,
**dadurch gekennzeichnet,**
**dass** die Luftschnittstelle (BT) gemäß dem Bluetooth-Standard ausgestaltet ist.

## Claims

1. Method for transferring a communications connection, with
- a local communications device (KE) assigned to a central communications device (PBX) and having a first transceiver unit (SE1) for an air interface (BT), and,
- a portable device (PE) having a second transceiver unit (SE2) for the air interface (BT) for exchanging information;
**characterized in that** a communications connection (GSM) between the portable device (PE) and an associated communications system (KS) is transferred to a communications connection routed via the air interface (BT) to the local communications device (KE) while the communications connection (GSM) is maintained and two-way user data for the communications connection is exchanged via the air interface (BT).

2. Method according to Claim 1,
**characterized in that**
the local communications device (KE) is connected to the central communications device (PBX) via at least two base channels (B1, B2) which transmit user data.

3. Method according to Claim 2,
**characterized in that**
in a transferred communications connection,
- user data of the communications connection are exchanged between the first transceiver unit (SE1) and the central communications device (PBX) via the first base channel (B1), and,
- user data are exchanged between the central communications device (PBX) and the local communications device (KE) via the second base channel (B2).

4. Method according to one of the preceding claims,
**characterized in that**
with positioning of the second transceiver unit (SE2) within range of the first transceiver unit (SE1), the transfer from the first transceiver unit (SE1) is initiated via the air interface (BT).

5. Method according to Claim 4,
**characterized in that**
the transfer is initiated only in the presence of a defined identifier of the first and/or second transceiver unit (SE1, SE2).

6. Method according to one of Claims 4 to 5,
**characterized in that**
the transfer is initiated only in the presence of a confirmation input on the local communications device (KE) and/or on the portable device (PE).

7. Method according to one of Claims 4 to 6,
**characterized in that**,
in order to initiate the transfer, the first transceiver unit (SE1) transmits a command for an automatic connection set-up from the first transceiver unit (SE1) via the central communications device (PBX) to the local communications device (KE) as a pre-programmed destination to the central communications device (PBX).

8. Method according to one of the preceding claims,
**characterized in that**
the air interface (BT) operates according to the Bluetooth standard.

9. Method according to one of the preceding claims,
**characterized in that**
the first transceiver unit (SE1) identifies itself to the second transceiver unit (SE2) as a wireless talk-listen combination.

10. Method according to one of the preceding claims,
**characterized in that**
the portable device (PE) has at least some of the functionalities of a mobile communications terminal.

11. Local communications device which is assigned to a central communications device (PBX), having a transceiver unit (SE2) for an air interface (BT),
**characterized by**
means for transferring a communications connection (GSM) between a portable device (PE) and an associated communications system (KS) to a communications connection routed via the air interface (BT) to the local communications device (KE), the means providing for maintenance of the communications connection (GSM), and
an air interface (BT) operated to exchange user data of the communications connection.

12. Local communications device according to Claim 11,
**characterized in that**
the air interface (BT) is designed according to the Bluetooth standard.

## Revendications

1. Procédé pour transférer une liaison de communication, avec
- un dispositif de communication décentralisé (KE) affecté à un dispositif de communication central (PBX) et pourvu d'une première unité d'émission/réception (SE1) pour une interface aérienne (BT) et
- un dispositif portable (PE) pourvu d'une seconde unité d'émission/réception (SE2) pour l'interface aérienne (BT) pour l'échange d'informations ;
**caractérisé en ce**
**que** l'on transfère une liaison de communication (GSM), existant entre le dispositif portable (PE) et un système de communication associé (KS), au dispositif de communication décentralisé (KE) dans une liaison de communication passant par l'interface aérienne (BT) en maintenant la liaison de communication (GSM) et en échangeant des données utiles de la liaison de communication de manière bidirectionnelle par le biais de l'interface aérienne (BT).

2. Procédé selon la revendication 1,
**caractérisé en ce**
**que** le dispositif de communication décentralisé (KE) est relié au dispositif de communication central (PBX) par le biais d'au moins deux canaux de base (B1, B2) transmettant des données utiles.

3. Procédé selon la revendication 2,
**caractérisé en ce**
**que**, lors d'une liaison de communication transférée,
- des données utiles de la liaison de communication sont échangées entre la première unité d'émission/réception (SE1) et le dispositif de communication central (PBX) par le biais du premier canal de base (B1) et
- des données utiles sont échangées entre le dispositif de communication central (PBX) et le dispositif de communication décentralisé (KE) par le biais du second canal de base (B2).

4. Procédé selon l'une des revendications précédentes,
**caractérisé en ce**
**que**, lorsque la seconde unité d'émission/réception (SE2) est positionnée à portée de la première unité d'émission/réception (SE1), le transfert est déclenché par la première unité d'émission/réception (SE1) sur l'interface aérienne (BT).

5. Procédé selon la revendication 4,
**caractérisé en ce**
**que** le déclenchement du transfert a lieu uniquement en présence d'un indicatif d'identification déterminé de la première et/ou seconde unité d'émission/réception (SE1, SE2).

6. Procédé selon l'une des revendications 4 à 5,
**caractérisé en ce**
**que** le déclenchement du transfert a lieu uniquement en présence d'une entrée de confirmation au niveau du dispositif de communication décentralisé (KE) et/ou du dispositif portable (PE).

7. Procédé selon l'une des revendications 4 à 6,
**caractérisé en ce**
**que**, pour déclencher le transfert, la première unité d'émission/réception (SE1) envoie au dispositif de communication central (PBX) une commande pour l'établissement automatique d'une liaison de la première unité d'émission/réception (SE1), via le dispositif de communication central (PBX), vers le dispositif de communication décentralisé (KE), en tant que destinataire programmé à l'avance,.

8. Procédé selon l'une des revendications précédentes,
**caractérisé en ce**
**que** l'interface aérienne (BT) fonctionne selon la norme Bluetooth.

9. Procédé selon l'une des revendications précédentes,
**caractérisé en ce**
**que** la première unité d'émission/réception (SE1) s'identifie vis-à-vis de la seconde unité d'émission/réception (SE2) en tant que combiné micro-casque sans fil.

10. Procédé selon l'une des revendications précédentes,
**caractérisé en ce**
**que** le dispositif portable (PE) est pourvu, au moins en partie, de fonctionnalités d'un terminal de communication mobile.

11. Dispositif de communication décentralisé affecté à un dispositif de communication central (PBX), avec une unité d'émission/réception (SE2) pour une interface aérienne (BT),
**caractérisé par**
des moyens pour transférer une liaison de communication (GSM), existant entre un dispositif portable (PE) et un système de communication associé (KS), au dispositif de communication décentralisé (KE) dans une liaison de communication passant par l'interface aérienne (BT), un maintien de la liaison de communication (GSM) étant prévu grâce aux moyens, et
une interface aérienne (BT) exploitée pour échanger des données utiles de la liaison de communication.

12. Dispositif de communication décentralisé selon la revendication 11,
**caractérisé en ce**
**que** l'interface aérienne (BT) est exécutée selon la norme Bluetooth.
